# EUROPÄISCHE PATENTSCHRIFT

(11) **EP 4 610 125 B1**
(45) Veröffentlichungstag und Bekanntmachung des Hinweises auf die Patenterteilung: **03.06.2026**
(21) Anmeldenummer: 24160599.7
(22) Anmeldetag: 29.02.2024
(51) Int. Cl.: B60T 17/22, B61L 23/00

(54) **VERFAHREN ZUM DURCHFÜHREN EINER BREMSPROBE BEI SPURGEFÜHRTEN FAHRZEUGVERBAND UND FÜR DIESES GEEIGNETES FAHRZEUG**
METHOD FOR PERFORMING A BRAKE TEST DURING TRACK-GUIDED VEHICLE ASSEMBLY AND VEHICLE SUITABLE FOR SAID METHOD
PROCÉDÉ POUR EFFECTUER UN ÉCHANTILLON DE FREINAGE DANS UN CONVOI DE VÉHICULES GUIDÉS ET VÉHICULE ADAPTÉ À CE PROCÉDÉ

(43) Veröffentlichungstag der Anmeldung: 03.09.2025
(73) Patentinhaber: Siemens Mobility GmbH, 80997 München (DE)
(72) Erfinder: Blum, Karsten, 38106 Braunschweig (DE); Okulevich, Vladimir, 38126 Braunschweig (DE)
(74) Vertreter: Siemens Patent Attorneys

(56) Entgegenhaltungen:
- DE-A1- 102011 113 090
- JP-A- 2001 158 355
- US-A1- 2014 244 080
- US-B2- 9 079 592

## Beschreibung

### Technisches Gebiet

Folgender Gegenstand ist von der Erfindung umfasst: ein Verfahren zum Durchführen einer Bremsprobe bei einem aus mehreren Fahrzeugen bestehenden spurgeführten Fahrzeugverband. Ferner ist folgender Gegenstand von der Erfindung umfasst: ein spurgeführtes Fahrzeug, bei dem Räder und Bremsen ein schwingungsfähiges System bilden. Ferner ist folgender Gegenstand von der Erfindung umfasst: ein Computerprogramm. Ferner ist folgender Gegenstand von der Erfindung umfasst: ein Computerlesbares Speichermedium für Daten.

### Technischer Hintergrund

Im Bereich des Güterzugverkehrs bei Eisenbahnunternehmen werden bedarfsbedingt Zugbildungen unter Beachtung der jeweils gültigen Güterzugbildungsvorschriften durchgeführt. Hierfür werden Fahrzeuge (Güterwagen) unterschiedlicher Bauarten und Gesellschaften auch länderübergreifend aneinandergereiht und mit Triebwagen (einem oder mehreren) zu einem Fahrzeugverband zusammengestellt.

Zum Bilden eines Güterzuges gehört neben dem Verbinden mit einer (derzeit nicht automatischen) Kuppelung auch das Verbinden des Bremssystems. Das Bremssystem bei Güterzügen wird mit Druckluft betrieben. Hierfür sind Fahrzeuge in Form von Güterwagen mit einer Hauptbremsluftleitung ausgestattet, die von Güterwagen zu Güterwagen verbunden werden muss. Man spricht in diesem Zusammenhang auch von einer durchgehenden Bremse, da sie von einer durchgehenden Hauptbremsluftleitung angetrieben wird. Eine elektrische Verbindung zwischen den Güterwagons ist bei dieser nicht erforderlich und derzeit auch nicht vorgesehen.

Mindestens nach einer Zugbildung ist gemäß dem Allgemeinen Eisenbahngesetz (AEG) Teil C. (Bau- und Betriebsrecht) §35 (Bremsen der Züge) eine Bremsprobe durchzuführen, bevor der Zug sich in Bewegung setzen darf. Diese Tätigkeit wird heute manuell durchgeführt, indem ein Wagenmeister in einer ersten Umrundung des gesamten Zuges feststellt, ob alle Bremsen angezogen sind und in einer zweiten Umrundung, ob sie ausgelöst sind. Das kann, je nach Zuglänge, mehrere Stunden in Anspruch nehmen.

Güterwagen haben unterschiedliche Bremssysteme. Wesentliche Unterschiede sind: Klotzbremsen, Scheibenbremsen und Trommelbremsen. Trommelbremsen befinden sich allerdings so gut wir nicht mehr im Einsatz. Klotzbremsen sind dagegen sehr verbreitet.

Die Zugprüfung erfolgt heute, in mehreren Schritten:
1. Schritt: Der Druckabfall der Hauptbremsluftleitung wird geprüft, diese darf einen bestimmten Wert nicht unterschreiten.
2. Schritt: Der Wagenmeister führt einen ersten Rundgang um den Güterzug durch und prüft dabei, ob alle Bremsen gelöst sind
3. Schritt: Der Lokomotivführer legt die Bremsen des Zuges an
4. Schritt: Der Wagenmeister geht erneut um den Zug herum und prüft, ob alle Bremsen angezogen sind.
5. Schritt: Der Lokomotivführer löst die Bremsen des Zuges Schritt: Der Wagenmeister geht erneut um den Zug herum und prüft, ob alle Bremsen gelöst sind.

In der DE19833279A1 ist eine Einrichtung zur Überwachung der Zugvollständigkeit, sowie der Überprüfung der Bremsprobe bei lokbespannten Zügen beschrieben. Dabei werden in der Lok Sensoren zur Ermittlung des Drucks in der mit Luft betriebenen Bremsleitung verwendet. Die DE29824583U1 beschreibt ebenfalls eine Einrichtung zur Überwachung der Zugvollständigkeit sowie der Überprüfung der Bremsprobe bei lokbespannten Zügen, bei der der Druck in der zentralen Bremsluftleitung überprüft wird. Dieses Verfahren ist jedoch recht aufwendig. Eine Aussage über die Bremsfunktion ist überdies nur für den gesamten Zug möglich.

DE102010025346B4 betrifft eine Vorrichtung und ein Verfahren zum Funkfernsteuern eines mobilen Bremsprobegerätes. Bei dieser technischen Lösung werden ferngesteuerte Motoreinheiten an jedem Wagen des Zuges vorgesehen, wobei diese eine Bremsprobe vornehmen können. Der mechanische Aufwand ist jedoch beträchtlich und die Gefahr von Fehlfunktionen hoch. Die DE102015004590A1 betrifft eine Bremsprüfung von Güterzügen. Es erfolgt ein Prüfen der Druckverhältnisse einer Hauptluftleitung und einer Bremsluftleitung und zusätzlich in den Bremszylindern. Weiterhin wird die Stellung einer Feststellbremse in den einzelnen Wagen überwacht. Auch diese technische Lösung ist mit einem beträchtlichen mechanischen Aufwand verbunden.

Die WO2018201171A1 betrifft ein Verfahren zur Durchführung einer automatischen Bremsprobe an einem Zug und dazu geeigneter Wagen. Jeder Wagen ist mit einer Auswerteeinheit ausgerüstet. Es werden an jedem Wagen der Bremszylinderdruck und die durch den Bremszylinderdruck bewirkte Bremskraft messtechnisch erfasst, von der Auswerteeinheit ausgewertet und an ein Zentralgerät übertragen. Bei dieser Lösung fallen zusätzlich noch Sensoren zur Messung der Bremskraft an, die die Komplexität der Vorrichtung zur automatischen Bremsprobe in Bezug auf die vorgenannten Lösungen zusätzlich erhöhen. Die EP2805859A betrifft eine Einrichtung und ein Verfahren zur Durchführung von geführten Bremsproben an Schienenfahrzeugen, bei dem ein mobiles Gerät auf dem letzten Wagen des Zuges den Druck in der Hauptdruckleitung messen und an ein anderes Gerät übertragen kann. Dieses kann gemäß der EP2805859A1 auch als Kupplungskopf an dem letzten Wagen befestigt werden. Bei Güterzügen ergibt sich allerdings die Problematik einer Energieversorgung dieses Zusatzgerätes. Die EP3464000B1 betrifft ein Verfahren sowie eine Vorrichtung zum automatischen Prüfen von Bremsen eines spurgebundenen Fahrzeugs mit Lichtleitern.

Dokument US2014/244080A1 offenbart eine Bremssteuereinrichtung für eine Bremsanlage eines Schienenfahrzeugs.

Ein negativer Effekt bei Klotzbremsen ist, dass durch die Reibung der metallenen Bremsklötze oder Bremssohlen das Rad stark belastet wird. Die dadurch aufgeraute Lauffläche erzeugt ein lautes Rollgeräusch, das mit zunehmender Geschwindigkeit immer großer wird. Weiterhin treten durch die unrunde und oder raue Oberfläche Vibrationen auf, die sowohl das Rad als auch die Streckeneinrichtungen belasten. Diese Vibrationen können im Extremfall zum Bruch des Rades führen. In der WO 2010/057628 A2 ist ein Messverfahren beschrieben, bei dem während der Fahrt des Zuges die betriebsbedingten Schwingungen zum Erkennen von unrunden oder rauen Oberflächen der Räder sowie des Betriebszustandes einer gelösten bzw. angelegten Bremse durch einen an der Achse befestigten Schwingungssensor erfasst werden können.

### Zusammenfassung der Erfindung

Die Aufgabe der Erfindung besteht darin, die beschriebenen Probleme im Stand der Technik zu beheben. Insbesondere ist es Aufgabe, dass ein Verfahren, ein Fahrzeug, ein Computerprogramm sowie eine Bereitstellungsvorrichtung für dieses Computerprogramm anzugeben, mit dem bzw. mit der die Durchführbarkeit einer automatisierten Bremsprobe ausgeweitet werden kann und dabei mit einer ausreichenden Zuverlässigkeit durchgeführt werden kann.

Beschrieben wird gemäß einem ersten Aspekt der Erfindung ein Verfahren zum Durchführen einer Bremsprobe bei einem aus mehreren Fahrzeugen bestehenden spurgeführten Fahrzeugverband, bei dem geprüft wird, ob sich die Bremsen des Fahrzeugverbandes ordnungsgemäß angelegen und lösen lassen.

Bei der durchzuführenden Bremsprobe handelt es sich um die aufgrund der Betriebsbestimmungen vorgesehene Bremsprobe, wie oben bereits erläutert. Diese Bremsprobe hat insbesondere auch vor der Inbetriebnahme eines Fahrzeugverbandes nach dessen Zusammenstellung zu erfolgen.

Rechnergestützt oder computerimplementiert ist eine Vorrichtung, wenn diese mindestens einen Computer oder Prozessor aufweist, oder ein Verfahren, wenn mindestens ein Computer oder Prozessor mindestens einen Verfahrensschritt des Verfahrens ausführt.

Eine Rechenumgebung ist eine IT-Infrastruktur, bestehend aus Funktionskomponenten wie Prozessoren, Speichereinheiten, Programmen und aus mit den Programmen zu verarbeitenden Daten, die zur Ausführung mindestens einer Applikation, die eine Aufgabe zu erfüllen hat, verwendet werden. Weitere Funktionskomponenten können aus Sensoren und Aktuatoren bestehen, welche eine Interaktion der Rechenumgebung mit der Außenwelt ermöglichen. Die IT-Infrastruktur kann auch als Netzwerk der genannten Funktionskomponenten organisiert sein.

Eine Cloud (auch als Rechnerwolke oder Datenwolke bezeichnet) ist eine Rechenumgebung für ein sog. Cloud-Computing. Gemeint ist eine IT-Infrastruktur, welche über Schnittstellen eines Netzwerks wie dem Internet verfügbar gemacht wird. Sie beinhaltet in der Regel Speicherplatz, Rechenleistung oder Software als Dienstleistung, ohne dass diese auf einer die Cloud nutzenden Recheninstanz installiert sein müssen. Die im Rahmen des Cloud-Computings angebotenen Dienstleistungen umfassen das gesamte Spektrum der Informationstechnik und beinhalten unter anderem die IT-Infrastruktur, Plattformen, Software und Rechenleistung, wobei der Cloud-Anbieter die angebotenen Ressourcen bedarfsgerecht an die Cloud-Nutzer verteilt, mit dem Ziel, die Ressourcen damit optimal auszuschöpfen.

Da in der Bahntechnik hohe Sicherheitsstandards hinsichtlich Funktion (Betriebssicherheit, Safety) sowie Angreifbarkeit (Übertragungssicherheit, Security) computerimplementierter Lösungen gelten, sind die Funktionalitäten einer Cloud, die in der Bahntechnik zum Einsatz kommt, hinsichtlich ihrer geteilten Verfügbarkeit üblicherweise begrenzt. Insbesondere, was den Zugriff eines potenziell unbegrenzten Kreises von Cloud-Nutzern angeht, sind daher Restriktionen erforderlich. Aber auch, was die Teilung von Rechenressourcen durch verschiedene Recheninstanzen angeht, muss mit Blick auf eine erforderliche Redundanz ein Zugriff begrenzt werden. Eine Technologie, die diese Restriktionen für die Bahntechnik berücksichtigt, wird im Zusammenhang mit dieser Erfindung auch als private Cloud bezeichnet, auch wenn eine private Cloud die mit Cloudtechnologie verbundenen technischen Merkmale nur eingeschränkt erfüllt.

Recheninstanzen bilden innerhalb einer Rechenumgebung funktionale Einheiten aus, die Applikationen (gegeben beispielsweise durch eine Anzahl von Programmmodulen) zugeordnet werden können und diese ausführen können. Diese funktionalen Einheiten bilden bei der Ausführung der Applikation physikalisch (beispielsweise Computer, Prozessor) und/oder virtuell (beispielsweise Programmmodul) in sich geschlossene Systeme.

Computer sind aus mehreren Funktionskomponenten bestehende elektronische Geräte mit Datenverarbeitungseigenschaften. Computer können beispielsweise Clients, Server, Handheld-Computer, Kommunikationsgeräte und andere elektronische Geräte zur Datenverarbeitung sein, die Prozessoren und Speichereinheiten aufweisen können und über Schnittstellen auch zu einem Netzwerk zusammengeschlossen sein können.

Prozessoren können beispielsweise Wandler, Sensoren zur Erzeugung von Messsignalen oder elektronische Schaltungen sein. Bei einem Prozessor kann es sich um einen Hauptprozessor (engl. Central Processing Unit, CPU), einen Mikroprozessor, einen Mikrocontroller, oder einen digitalen Signalprozessor, möglicherweise in Kombination mit einer Speichereinheit zum Speichern von Programmbefehlen und Daten handeln. Auch kann unter einem Prozessor ein virtualisierter Prozessor oder eine Soft-CPU verstanden werden.

Speichereinheiten können als computerlesbarer Speicher in Form eines Arbeitsspeichers (engl. Random-Access Memory, RAM) oder Datenspeichers (Festplatte oder Datenträger) ausgeführt sein.

Programmmodule sind einzelne Software-Funktionseinheiten, die einen erfindungsgemäßen Programmablauf von Verfahrensschritten ermöglichen. Diese Software-Funktionseinheiten können in einem einzigen Computerprogramm oder in mehreren miteinander kommunizierenden Computerprogrammen verwirklicht sein. Die hierbei realisierten Schnittstellen können softwaretechnisch innerhalb eines einzigen Prozessors umgesetzt sein oder hardwaretechnisch, wenn mehrere Prozessoren zum Einsatz kommen.

Schnittstellen können hardwaretechnisch, beispielsweise kabelgebunden oder als Funkverbindung, oder softwaretechnisch, beispielsweise als Interaktion zwischen einzelnen Programmmodulen eines oder mehrerer Computerprogramme, realisiert sein.

Zur Vermeidung von Missverständnissen sei an dieser Stelle angemerkt, dass einzelne Anspruchsmerkmale mit kleinen lateinischen Buchstaben durchnummeriert werden, ohne dass dabei Rücksicht auf die Anspruchsnummerierung genommen wird. Dies bedeutet, dass jeder Buchstabe im gesamten Anspruchssatz nur einmal vorkommt, was eine eindeutige Adressierung der betreffenden Anspruchsmerkmale ohne Nennung der Anspruchsnummer ermöglicht. Deswegen kommt der Reihenfolge der Buchstaben jedoch keine Bedeutung zu.

Erfindungsgemäß ist vorgesehen, dass
im angelegten Zustand der Bremse in jedem Fahrzeug
a) mit einem Aktor eine Schwingung in einem die Bremse und die Räder des betreffenden Fahrzeugs enthaltenden schwingungsfähigen System erzeugt wird,
b) mit einem Sensor die erzeugte Schwingung in dem betreffenden schwingungsfähigen System als ein erstes Messergebnis für den angelegten Zustand für das betreffende Fahrzeug aufgezeichnet wird und danach im gelösten Zustand der Bremse in jedem Fahrzeug
c) mit dem jeweiligen Aktor eine Schwingung in dem betreffenden schwingungsfähigen System erzeugt wird,
d) mit dem jeweiligen Sensor die erzeugte Schwingung in dem betreffenden schwingungsfähigen System als Messergebnis für den gelösten Zustand für das betreffende Fahrzeug aufgezeichnet wird, und
e) rechnergestützt jedes erste Messergebnis mit einem ersten Referenzergebnis für den gelösten Zustand verglichen wird,
   und/oder rechnergestützt jedes zweite Messergebnis mit einem zweiten Referenzergebnis für den angelegten Zustand verglichen wird,
   und/oder rechnergestützt jedes erste Messergebnis mit dem betreffenden zweiten Messergebnis verglichen wird und ein ermitteltes Unterschiedsergebnis mit einem dritten Referenzergebnis für den Unterschied verglichen wird,
f) für den Fall, dass zwischen einem der Messergebnisse und/oder der Unterschiedsergebnisse sowie dem zugehörigen der Referenzergebnisse eine Abweichung festgestellt wird, die außerhalb eines zulässigen Toleranzbereiches liegt, rechnergestützt ein Fehlersignal erzeugt wird.

In der vorliegenden Erfindungsbeschreibung wird zwischen ersten Messergebnissen für den angelegten Zustand der Bremse und zweiten Messergebnissen für den gelösten Zustand der Bremsen unterschieden. Dementsprechend wird ebenfalls zwischen ersten Referenzergebnissen für den angelegten Zustand der Bremse und zweiten Referenzergebnissen für den gelösten Zustand der Bremse unterschieden. Im Folgenden wird außerdem inzwischen ersten Fehlerergebnissen, zweiten Fehlerergebnissen und dritten Fehlerergebnissen unterschieden. Sofern die im Rahmen dieser Erfindungsbeschreibung ohne nähere Angabe (in Bezug auf erste, zweite und dritte) von Messergebnissen bzw. Referenzergebnissen bzw. Fehlerergebnissen die Rede ist, so gelten die damit verbundenen Aussagen allgemein für die ersten und zweiten Messergebnisse bzw. für die ersten, zweiten und dritten Referenzergebnisse bzw. für die ersten, zweiten und dritten Fehlerergebnisse gleichermaßen.

Das Fehlersignal kann in an sich bekannter Weise unterschiedlich genutzt werden. Beispielsweise kann dies zur Ausgabe eines Fehlers mithilfe einer geeigneten Ausgabevorrichtung wie einer Warnleuchte oder einem Bildschirm genutzt werden. Ein Fehlersignal kann jedoch auch rechnergestützt verarbeitet werden, um eine automatische Reaktion in dem erfindungsgemäßen Verfahren auszulösen. Beispielsweise kann bei Vorliegen eines Fehlersignals das Losfahren eines Zugfahrzeugs für den Fahrzeugverband blockiert werden.

Die Schwingung wird durch einen Aktor erzeugt und durch einen Sensor gemessen. Dies bedeutet, dass der Aktor zum Erzeugen bzw. der Sensor zum Messen von Schwingungen geeignet sein muss. Dies bedeutet nicht zwangsläufig, dass es sich bei dem Aktor und dem Sensor um zwei unterschiedliche Komponenten handelt. Es ist auch denkbar, dass beispielsweise ein Piezokristall als Aktor verwendet wird, um eine Schwingung in das schwingungsfähige System einzuleiten und anschließend derselbe Piezokristall von einer Schwingungsantwort angeregt wird und diese als Sensor aufzeichnet. Diese Aussage gilt für alle Arten von Schwingungswandlern, die sowohl Energie in Schwingungen umwandeln als auch Schwingungen in Energie umwandeln können.

Die Erfindung macht sich die Erkenntnis zu Nutze, dass das schwingungsfähige System, welches die Bremsen sowie die Räder des Fahrzeugs enthält, in Abhängigkeit davon, ob die Bremsen angelegt sind oder gelöst sind, unterschiedliche Schwingungseigenschaften aufweist, die sich messtechnisch erfassen lassen.

Allerdings ist es so, dass die automatische Bremsprobe insbesondere vor Fahrtantritt oder auch in Betriebspausen durchgeführt werden soll, wenn also das Fahrzeug gerade auf dem Gleis steht und infolgedessen keine dynamischen Beanspruchungen des Fahrzeugverbandes zu Schwingungen führen. Hier setzt die erfindungsgemäße Idee an, dass ein Aktor eingesetzt wird, der Schwingungen in dem schwingungsfähigen System erzeugt. Dies hat zusätzlich den Vorteil, dass diese Schwingungen eine bekannte Größe darstellen, mit der das schwingungsfähiges System angeregt wird. Damit kann auch die Schwingungsantwort des schwingungsfähigen Systems besser vorausgesagt werden. Dynamische Beanspruchungen, die zu analysierende Schwingungen während des Betriebs des Fahrzeugverbandes erzeugen, sind im Vergleich hierzu wesentlich schwerer einzuschätzen, weswegen auch die Schwingungsantwort schwieriger auszuwerten ist.

Es ist bekannt, dass Schwingungen durch unterschiedliche charakteristische Eigenschaften beschrieben werden können. Hierzu gehören beispielsweise die Schwingungsamplitude, die Schwingungsfrequenz, der Schwingungsverlauf inklusive des Abklingverhaltens (beeinflusst durch die Dämpfung des schwingungsfähigen Systems) und ein Schwingungsspektrum, welches durch Analyse des Schwingungsverlaufes beispielsweise durch eine FourierTransformation gewonnen werden kann. Das erfindungsgemäß erzeugte Messergebnis kann vorteilhaft hinsichtlich zumindest einem dieser genannten Aspekte ausgewertet werden. Dasselbe gilt für das erfindungsgemäße Unterschiedsergebnis. Die Referenzergebnisse beschreiben hierbei ein unter bestimmten Bedingungen (beispielsweise angezogene Bremse oder gelöste Bremse) zu erwartendes Messergebnis. Gewisse Abweichungen von diesem Messergebnis werden bei einem Vergleichen toleriert, wobei dieses Abweichen durch einen vorgegebenen Toleranzbereich definiert wird.

Ein Vorteil der Erfindung besteht darin, dass ein Aktor zur Erzeugung von Schwingungen in dem schwingungsfähigen System vorgesehen ist. Dies hat insbesondere zwei Vorteile. Dadurch, dass der Aktor eine Schwingungsanregung mit bekanntem Energiegehalt und mit bekannter Charakteristik erzeugen kann, fällt die Auswertung der Schwingungsantwort leichter. Diese lässt sich nämlich bei einer bekannten Anregung auch leichter vorhersagen. Außerdem kann das Verfahren der automatischen Bremsprobe erfindungsgemäß auch im Stillstand des Fahrzeugverbandes angewandt werden. Dies kann nur dadurch erreicht werden, dass mit dem Aktor eine Energiequelle für das Erzeugen von Schwingungen zur Verfügung steht und deswegen keine betriebsbedingt auftretenden Schwingungen zur Auswertung zur Verfügung stehen müssen. Diese können zwar ebenfalls genutzt werden, wenn die Bremsprobe während der Fahrt des Fahrzeugverbandes durchgeführt wird (beispielsweise, um während des Betriebs die nach wie vor zuverlässige Funktion der Bremsen zu überprüfen). Der besonders attraktive Fall, die Bremsprobe vor Inbetriebnahme, wie gesetzlich vorgeschrieben, durchzuführen, lässt sich allerdings nur unter dem erfindungsgemäßen Einsatz des Aktors abdecken. Für diesen Fall ist besonders vorteilhaft, dass die durch den Aktor erzeugte Schwingung nicht oder zumindest nur wenig durch betriebsbedingte Schwingungen überlagert wird und die Schwingungsantwort im untersuchten schwingungsfähigen System (bestehend zumindest aus den Rädern und den Bremsen eines Fahrzeugs) daher einfacher zu analysieren ist.

Beschrieben wird gemäß einem weiteren Aspekt der Erfindung ein spurgeführtes Fahrzeug, bei dem Räder und Bremsen ein schwingungsfähiges System bilden, wobei das Fahrzeug n) einen Sensor zum Aufzeichnen des Schwingungsverhaltens des schwingungsfähigen Systems aufweist,
o) eine Rechenumgebung mit einem Computer bildet.

Gemäß der Erfindung sind die oben erklärten Aspekte der Erfindung dadurch bestimmt, dass p) die Rechenumgebung eingerichtet ist, die o. g. Schritte e) und f) auszuführen,
q) der Sensor als Schwingungswandler ausgeführt ist, der auch als Aktor zum Erzeugen einer Schwingung in dem schwingungsfähigen System verwendbar ist, wobei der Schwingungswandler eingerichtet ist, die o. g. Schritte a) bis d) auszuführen,
oder das Fahrzeug einen Aktor zum Erzeugen einer Schwingung in dem schwingungsfähigen System aufweist, wobei der Sensor eingerichtet ist, die o. g. Schritte b) und d) gemäß Anspruch 1 auszuführen und wobei der Aktor eingerichtet ist, die o. g. Schritte a) und c) auszuführen.

Dadurch, dass die Funktionalität des Aktors in dem Fahrzeug verwirklicht ist, ist dieses zur Durchführung des oben genauer erläuterten Verfahrens geeignet. Die mit der Durchführung des Verfahrens verbundenen Vorteile werden durch das Fahrzeug insofern in gleicher Weise erreicht. Zu diesem Zweck wird das Fahrzeug mit anderen Fahrzeugen zu einem Fahrzeugverband zusammengeschlossen, wobei vorzugsweise alle Fahrzeuge des Fahrzeugverbandes in der erfindungsgemäßen Weise ausgestattet sind. Hierdurch kann die Bremsprobe vor Inbetriebnahme des Fahrzeugverbandes vollständig automatisiert werden.

Zu bemerken ist jedoch, dass auch ein Fahrzeugverband, in dem nur ein Teil der Fahrzeuge in der erfindungsgemäßen Weise ausgestattet ist, von der erfindungsgemäßen Verfahren profitieren kann. In diesem Fall ist lediglich teilweise eine manuelle Bremsprobe durch das Personal durchzuführen, die nur auf diejenigen Fahrzeuge bezogen ist, welche nicht an der automatisierten Bremsprobe teilnehmen können. Dies stellt jedoch eine Zeitersparnis dar, sodass sich die Vorteile der Erfindung auch in diesem Falle auswirken.

Beschrieben wird gemäß einem weiteren Aspekt der Erfindung ein Computerprogramm, umfassend Programmbefehle, die bei der Ausführung des Programms durch einen Computer in einer Rechenumgebung diesen dazu veranlassen, die Schritte e) und f) (s. o.) auszuführen.

Gemäß der Erfindung wird somit ein Programmmodule enthaltendes Computerprogrammprodukt mit Programmbefehlen beschrieben, wobei die Programmmodule auf demselben oder mehreren Prozessoren laufen können. Mittels des Computerprogrammproduktes, das ein Computerprogramm oder mehrere Computerprogramme umfassen kann, sind jeweils das erfindungsgemäße Verfahren und/oder dessen Ausführungsbeispiele ausführbar und mit der Ausführung werden die vorstehend beschriebenen Vorteile erreicht.

Beschrieben wird gemäß einem weiteren Aspekt der Erfindung ein Computerlesbares Speichermedium für Daten, welches Datensätze des Computerprogrammproduktes nach dem letzten voranstehenden Anspruch speichert.

Darüber hinaus wird somit eine Bereitstellungsvorrichtung zum Speichern und/oder Bereitstellen des Computerprogramms in Form eines computerlesbaren Speichermediums beschrieben. Die Bereitstellungsvorrichtung ist beispielsweise eine Speichereinheit, die das Computerprogramm speichert und zum Abruf bereitstellt. Alternativ oder zusätzlich ist die Bereitstellungsvorrichtung ein Netzwerkdienst, ein Computersystem, ein Serversystem, insbesondere ein verteiltes, beispielsweise cloudbasiertes Computersystem oder virtuelles Rechnersystem, welches das Computerprogramm auf einem computerlesbaren Speichermedium speichert und vorzugsweise in Form eines Datenstroms bereitstellt.

Die Bereitstellung erfolgt in Form von Programmmodule beschreibenden Programmdatensätzen als Datei, insbesondere als Downloaddatei, oder als Datenstrom, insbesondere als Downloaddatenstrom, des Computerprogramms. Das Computerprogramm wird beispielsweise unter Verwendung der Bereitstellungsvorrichtung in eine Rechenumgebung übertragen, sodass das erfindungsgemäße Verfahren in einer Recheninstanz oder mehreren Recheninstanzen dieser Rechenumgebung zur Ausführung gebracht werden kann.

### Allgemeine Ausführungsbeispiele der Erfindung

Weiterbildungen der Erfindung beschreibende Varianten werden nachfolgend ohne Beschränkung des grundlegenden Gedankens der Erfindung erläutert.

Gemäß einer Variante sind die oben erklärten Aspekte der Erfindung dadurch bestimmt, dass der Aktor als Schwingung einen vorgegebenen Schwingungsimpuls erzeugt und der Sensor danach als erzeugte Schwingung eine Impulsantwort des schwingungsfähigen Systems aufzeichnet.

Durch Einleiten eines Schwingungsimpulses und anschließende Analyse der Impulsantwort ist es vorteilhaft möglich, ein Abklingverhalten des schwingungsfähigen Systems zu ermitteln. Dieses lässt zum Beispiel Aussagen über die Dämpfung des Systems zu, da die Schwingung schneller abklingt, wenn die Dämpfung des schwingungsfähigen Systems größer ist. Es hat sich in diesem Zusammenhang gezeigt, dass die Dämpfung des schwingungsfähigen Systems bei angelegten Bremsen größer ist als bei gelösten Bremsen, sodass auf Grundlage der Impulsantwort eine Bremsprobe durchgeführt werden kann.

Gemäß einer Variante sind die oben erklärten Aspekte der Erfindung dadurch bestimmt, dass der Aktor als Schwingung einen vorgegebenen Schwingungsverlauf erzeugt und der Sensor während der Erzeugung der Schwingung und/oder danach als erzeugte Schwingung eine Schwingungsantwort des schwingungsfähigen Systems aufzeichnet.

Wird als Schwingung ein vorgegebener Schwingungsverlauf erzeugt, so kann vorteilhaft untersucht werden, wie das schwingungsfähige System auf eine periodische Anregung (mit konstanter oder veränderlicher Periode) reagiert. Beispielsweise ist es möglich, den vorgegebenen Schwingungsverlauf so zu wählen, dass sich die Anregungsfrequenz stetig verändert. Die Schwingungsantwort kann dann durch eine Resonanzfrequenz des schwingungsfähigen Systems laufen, wobei dies durch ein Maximum der Amplitude der Schwingungen des schwingungsfähigen Systems ermittelt werden kann.

Gemäß einer Variante sind die oben erklärten Aspekte der Erfindung dadurch bestimmt, dass jedes Messergebnis vor dem Durchführen des Schrittes d) gemäß Anspruch 1 rechnergestützt bearbeitet wird.

Die rechnergestützte Bearbeitung des Messergebnisses ermöglicht es vorteilhaft, bestimmte Eigenschaften des schwingungsfähigen Systems besser analysieren zu können. Diese Eigenschaften treten durch das rechnergestützte Bearbeiten des Messergebnisses besser zutage und können dadurch auch dann rechnergestützt erkannt werden, wenn der betreffende Effekt nur wenig ausgeprägt ist. Vorteilhaft wird das erfindungsgemäße Verfahren dadurch empfindlicher gegenüber Änderungen wie zum Beispiel den Vergleich des schwingungsfähigen Systems mit angelegten bzw. mit gelösten Bremsen.

Im Sinne dieser Erfindungsbeschreibung handelt es sich auch nach der Bearbeitung des Messergebnisses immer noch um das weiterzuverarbeitende Messergebnis. Wird ein derart bearbeitetes Messergebnis für den Schritt d) verwendet, werden selbstverständlich die Referenzergebnisse ebenfalls in einer zum weiterzuverarbeitenden Messergebnis passenden Weise erzeugt. Nur dann kann ein rechnergestützter Vergleich des weiterzuverarbeitenden Messergebnisses mit dem zugehörigen Referenzergebnis erfolgreich sein.

Gemäß einer Variante sind die oben erklärten Aspekte der Erfindung dadurch bestimmt, dass jedes Messergebnis derart bearbeitet wird, dass dieses ein Maß für die Resonanzfrequenz des schwingungsfähigen Systems darstellt.

Ein Maß für die Resonanzfrequenz wird zum Beispiel erhalten, wenn eine Anregungsfrequenz der durch den Aktor erzeugten Anregungsschwingung kontinuierlich verändert wird und in dem Messergebnis für die Schwingungsantwort nach der maximalen Schwingungsamplitude gesucht wird. An diesem Ort ist die Ableitung des Amplitudenverlaufes nach der Zeit gleich null. Bei einem solchen Verfahren würde die Resonanzfrequenz allerdings nicht genau getroffen, wenn die kontinuierliche Veränderung der Frequenz der Anregungsschwingung nicht sehr langsam erfolgt. Dies würde das Verfahren jedoch verlangsamen und damit unwirtschaftlich machen. Das Maß für die Resonanzfrequenz muss jedoch nur so genau bestimmt werden, dass eine qualitative Aussage möglich ist, ob die Bremsen gerade angezogen oder gelöst sind.

Gemäß einer Variante sind die oben erklärten Aspekte der Erfindung dadurch bestimmt, dass jedes Messergebnis derart bearbeitet wird, dass dieses ein Frequenzspektrum darstellt.

Frequenzspektren können beispielsweise durch eine Fourierreihentransformation erhalten werden. Diese lassen weitgehende Aussagen über die Charakteristik der gemessenen Schwingung zu. Hier ließe sich also ohne weiteres die Charakteristik von einer Schwingungsantwort bei angelegten Bremsen von einer Schwingungsantwort bei gelösten Bremsen unterscheiden.

Diese Untersuchungsmethode ist vorteilhaft auch so hochauflösend, dass beispielsweise unterschieden werden kann, wenn nicht alle Bremsbeläge von einem Rad im betreffenden schwingungsfähigen System gelöst sind (beispielsweise durch Verklemmen eines Bremsbelags). Genauso kann ermittelt werden, ob nicht alle Bremsbeläge im betreffenden schwingungsfähigen System angelegt sind (beispielsweise aufgrund des Verlusts eines Bremsbelags). Somit sind bei Auftreten von Fehlern weiterführende Aussagen hinsichtlich der Fehlerqualität möglich.

Gemäß einer Variante sind die oben erklärten Aspekte der Erfindung dadurch bestimmt, dass jedes Messergebnis derart bearbeitet wird, dass dieses ein Maß für die Dämpfung des schwingungsfähigen Systems darstellt.

Es wurde bereits erklärt, dass das schwingungsfähige System bei angelegten Bremsen eine größere Dämpfung aufweist als bei gelösten Bremsen. Die Dämpfung des Systems kann auf verschiedene Weise bestimmt werden. Eine Möglichkeit ist, das Abklingverhalten der Messung mit angelegten Bremsen (erstes Messergebnis) und der Messung mit gelösten Bremsen (zweites Messergebnis) zu vergleichen. Damit ist ein direkter Vergleich der Messergebnisse möglich, um den Unterschied in einem Unterschiedsergebnis festzulegen. Das Abklingverhalten kann dabei beispielsweise derart untersucht werden, dass der Zeitbedarf gemessen wird, bis die Amplitude Schwingungsantwort sich halbiert hat (das resultierende Messergebnis wäre somit eine Zeitspanne). Dies ist selbstverständlich nur ein Beispiel. Auch andere Verringerungsfaktoren als 1/2 können gewählt werden.

Gemäß einer Variante sind die oben erklärten Aspekte der Erfindung dadurch bestimmt, dass g) als erste Referenzergebnisse und/oder als zweite Referenzergebnisse und/oder als dritte Referenzergebnisse für eine vorgegebene Vielzahl von Bremstypen oder für eine vorgegebene Vielzahl von Paarungen zwischen Bremstypen und Fahrzeugtypen erstellt werden und h) für jedes Fahrzeug ein bestimmtes erstes Referenzergebnis und/oder zweites Referenzergebnis und/oder drittes Referenzergebnis unter Berücksichtigung des im Fahrzeug zum Einsatz kommenden Bremstyps oder unter Berücksichtigung sowohl des zum Einsatz kommenden Bremstyps als auch des Fahrzeugtyps zum Abruf im Bedarfsfall gespeichert wird.

Wo die betreffenden Referenzergebnisse abgespeichert werden, hängt von der Rechenumgebung ab, die für die Durchführung des erfindungsgemäßen Verfahrens verwendet wird. Wird die Auswertung der Bremsprobe beispielsweise durch eine Telematikeinheit auf dem Fahrzeug selbst durchgeführt, so kann die Telematikeinheit auch eine Speichereinheit zur Verfügung stellen, in der fahrzeugindividuell die erforderlichen Referenzergebnisse abgespeichert werden können. Steht eine Netzwerkslösung, insbesondere eine Lösung in Cloud-Technologie, zur Verfügung, so können die Referenzergebnisse auch zentral abgespeichert werden, wobei diese zentral beispielsweise über Wagenkennungen den betreffenden Fahrzeugen zugeordnet werden können.

Der große Vorteil einer Verwendung von hinsichtlich des Bremstyps individuellen oder hinsichtlich der Paarung des Bremstyps mit dem Fahrzeugtyp, in dem die betreffende Bremse verbaut ist, individuellen Referenzergebnissen ist der Folgende. Es ist damit möglich, dass bessere Näherungswerte für die zu erwartenden Beträge der Messgrößen zur Verfügung stehen. Hierdurch ist es mit größerer Sicherheit möglich, bestimmte Aussagen, insbesondere die Tatsache des gelösten Zustands der Bremse bzw. des angelegten Zustands der Bremse, zu bestätigen. Auch die bereits erwähnte Analyse hinsichtlich eines teilweisen Anliegens bzw. teilweisen gelöst seins der Bremsbeläge während der Bremsprobe kann auf diese Weise besser bestimmt werden.

Konkret wirkt sich die Verwendung der individuellen Referenzergebnisse auch auf die erforderlichen Toleranzbereiche aus, die bei der Durchführung des erfindungsgemäßen Verfahrens für die zuverlässige Erkennung von Fehlern festgelegt werden. Allgemein kann man sagen, dass die Toleranzen, die es zu berücksichtigen gilt, umso kleiner gewählt werden können, je besser die Referenzergebnisse an die im betreffenden Fahrzeug vorliegenden individuellen Gegebenheiten angepasst sind. Je kleiner der Toleranzbereich gewählt werden kann, desto sicherer lässt sich das automatisierte Verfahren zur Bremsprobe vorteilhaft durchführen.

Gemäß einer Variante sind die oben erklärten Aspekte der Erfindung dadurch bestimmt, dass i) ein erstes Referenzergebnis und/oder ein zweites Referenzergebnis und/oder ein drittes Referenzergebnis für mindestens ein Fahrzeug individuell ermittelt wird und j) für jedes Fahrzeug das ermittelte erste Referenzergebnis und/oder zweite Referenzergebnis und/oder dritte Referenzergebnis zum Abruf im Bedarfsfall gespeichert wird. Durch eine fahrzeugindividuelle Ermittlung von Referenzergebnissen wird erreicht, dass diese unabhängig davon, welcher Bremsentyp oder Fahrzeugtyp zum Einsatz kommt, durch eine Messung mit der zur Verfügung stehenden Messgenauigkeit ermittelt werden kann. Hierdurch kann vorteilhaft die Sicherheit bei der Durchführung der automatischen Bremsprobe weiter verbessert werden. Ein weiterer Vorteil besteht darin, dass eine derartige Messung während der Lebenszeit des Fahrzeugs bzw. der Lebenszeit der im Fahrzeug verbauten Bremsenkomponenten mehrfach wiederholt werden kann. Damit können Veränderungen (beispielsweise Verstimmungen) des schwingungsfähigen Systems (insbesondere der Räder und der Bremsbeläge oder Bremsscheiben) aufgrund von Abnutzungserscheinungen erfasst und bei zukünftigen Messungen somit kompensiert werden.

Natürlich kann das Verfahren der fahrzeugindividuellen Erstellung eines Referenzergebnisses auch mit dem vorgenannten Verfahren der Verwendung von Bremstypen und/oder Fahrzeugtypen beschreibenden Referenzergebnissen kombiniert werden. In diesem Fall ist es möglich, dass, wenn beispielsweise ein Fahrzeugtyp noch nicht erfasst ist, für diesen ein individueller Wert bestimmt wird, während für Fahrzeugtypen, für die bereits Referenzergebnisse zur Verfügung stehen, die verfügbaren Referenzergebnisse gespeichert werden. Somit ist in diesem Fall eine Erstellung von Referenzergebnissen nicht für einen ganzen Fahrzeugverband, sondern höchstens für Fahrzeuge erforderlich, die mit den verfügbaren Referenzergebnissen noch nicht erfasst werden können. Einerseits wird damit der Aufwand einer Vorbereitung der Bremsprobe so gering wie möglich gehalten, andererseits ist eine zuverlässige Durchführung der Bremsprobe auch für Wagen möglich, für die noch keine geeigneten Referenzergebnisse erfasst wurden. Vorteilhaft ergibt sich so ein Optimum hinsichtlich des anfallenden Aufwandes bei gleichzeitig höchsten Anforderungen an die Funktionszuverlässigkeit bzw. Betriebssicherheit.

Gemäß einer Variante sind die oben erklärten Aspekte der Erfindung dadurch bestimmt, dass k) erste Fehlerergebnisse und/oder zweite Fehlerergebnisse und/oder dritte Fehlerergebnisse für das Auftreten typischer bei der Bremsprobe zu ermittelnder Fehlerarten gespeichert sind, I) für den Fall, dass in dem Schritt f) (s. o.) ein Fehlersignal erzeugt wird,
rechnergestützt das betreffende erste Messergebnis mit den ersten Fehlerergebnissen verglichen wird, und/oder rechnergestützt das betreffende zweite Messergebnis mit den zweiten Fehlerergebnissen verglichen wird,
und/oder rechnergestützt das ermittelte Unterschiedsergebnis mit den dritten Fehlerergebnissen verglichen wird,
m) für den Fall, dass zwischen einem der Messergebnisse und/oder einem der Unterschiedsergebnisse sowie einem zugehörigen Fehlerergebnis im Rahmen vorgegebener Abweichungen eine Übereinstimmung festgestellt wird, rechnergestützt eine die betreffende Fehlerart beschreibende Fehlermeldung erzeugt wird.

Unter Fehlerergebnissen im Sinne dieser Erfindungsbeschreibung sind dem Wesen nach Ergebnisse zu verstehen, die mit den bereits erläuterten Referenzergebnissen vergleichbar sind. Dabei beschreiben die Fehlerergebnisse die Eigenschaften von Messergebnissen, welche selbst nicht messtechnisch falsch sind, sondern einen im Bremssystem aufgetretenen, tatsächlich vorliegenden Fehler (richtig) beschreiben. Auf diese Weise lässt sich vorteilhaft nicht nur ermitteln, dass im Bremssystem ein Fehler vorliegt, sondern dieser Fehler kann auch identifiziert werden, wenn dieser einem Fehlerergebnis entspricht.

Eine auf die identifizierte Fehlerart gerichtete Fehlermeldung kann beispielsweise für den Zugführer oder an eine Leitzentrale ausgegeben werden, um eine Entscheidung hinsichtlich des Weiterbetriebes des betreffenden Fahrzeugverbandes (Zuges) zu treffen. Die Fehlermeldung kann auch für Wartungsarbeiten verwendet werden, um gezielt Reparaturen vorzunehmen. Natürlich kann die Fehlermeldung auch rechnergestützt, beispielsweise durch eine automatische Zugsteuerung ausgewertet werden, um eine automatische Sicherheitsmaßnahme wie zum Beispiel eine Zwangsbremsung einzuleiten. Dadurch ergibt sich der Vorteil, dass auf auftretende Fehler im Bremssystem zeitnah reagiert werden kann. Hiervon profitiert das Sicherheitsniveau im Zugverkehr. Auch können Fehler früher erkannt werden, um diese bereits zu beheben, bevor sich überhaupt ein Sicherheitsrisiko ergibt.

Die genannten vorgegebenen Abweichungen sind zu berücksichtigen, da Messfehler auch bei der Beurteilung der Fehlerergebnisse auftreten können. Es handelt sich somit also um einen Toleranzbereich, wie dieser vorstehend schon beschrieben wurde. Zur eindeutigen Abgrenzung ist im Rahmen dieser Erfindungsbeschreibung im Zusammenhang mit diesem Toleranzbereich jedoch von vorgegebenen Abweichungen die Rede.

Gemäß einer Variante sind die oben erklärten Aspekte der Erfindung dadurch bestimmt, dass für jedes schwingungsfähige System zumindest eines der Fahrzeuge redundante Aktoren und/oder Sensoren zum Einsatz kommen.

Redundanz bei der Verwendung von Sensoren und Aktoren bzw. von Wandlern, die sowohl als Sensoren als auch als Aktoren zum Einsatz kommen können, erzeugt eine zusätzliche Sicherheit, da bei Ausfall eines Gerätes des betreffenden Redundanzpaares die Bremsprobe weiter durchgeführt werden kann. Die Erforderlichkeit eines Auswechselns des defekten Redundanzpartners kann beispielsweise in einer entsprechenden Fehleranzeige verwirklicht werden, wenn eine Selbstdiagnose der betroffenen Redundanzpartner vorgesehen ist. Da es sich bei der Bremsprobe um eine sicherheitskritische Maßnahme handelt, die nach Zusammenstellungen von Fahrzeugverbänden im Schienenverkehr durchzuführen ist, kann durch die Redundanz ein vorgegebenen Sicherheitslevel erreicht werden (hierzu im Folgenden noch mehr).

Eine weitere Möglichkeit der Ausnutzung von Redundanz ist das Durchführen von Mehrheitsentscheidungen (Voting), bei dem nur Ergebnisse berücksichtigt werden, die mehrheitlich als übereinstimmend gewertet werden. Hierbei können die bereits angesprochenen Toleranzen bzw. vorgegebenen Abweichungen berücksichtigt werden, um zu entscheiden, ob verglichene Ergebnisse als übereinstimmend oder nicht übereinstimmend gewertet werden müssen.

Ein Vergleicher, auch Voter genannt, ist eine Einrichtung zur Ermittlung einer Funktionsfähigkeit redundanter Systeme. Mehrheitsentscheidungssysteme, kurz MooN Systeme, werden der aktiven Redundanz zugeordnet (Majoritätsredundanz). Sie werden als Mittel zur Steigerung der Fehlertoleranz von Systemen, für die eine hohe funktionale Sicherheit (Safety) gegen Ausfall oder Auftreten von Fehlern gefordert wird, eingesetzt. Es gibt verschiedene Architekturen von MooN Systemen. Praktische Anwendungen finden sich in simplex (1oo2), duplex (2oo2), triplex (2oo3) und quadruplex (3oo4) Architekturen wieder, Die Ergebnisse der MooN Systeme werden von dem Mehrheitsentscheider (Voter) verglichen, um das Ergebnis der Mehrheit weiterzugeben. Die Weitergabe des Ergebnisses erfolgt, solange mindestens M der N Systeme funktionieren (gilt z. B. für Hardwarekomponenten und Maschinen) bzw. M der N Ergebnisse beim Vergleichen übereinstimmen (gilt z. B. für Daten und Messwerte). Anderenfalls gilt das Gesamtsystem als ausgefallen, und es kann ein Fehler ausgegeben werden.

Ein Voter kann softwaretechnisch oder hardwaretechnisch realisiert sein. Ein softwaretechnisch realisierter Voter besteht aus einem Programmmodul für das Vergleichen, auch Voting genannt, welches als Eingaben die oben genannten Ergebnisse verarbeitet und als Ausgabe einen Fehler oder auch eine Freigabe generiert. Hardwaretechnisch kann ein Voter auch als Analogrechner ausgeführt sein, der ein Voting durch eine logische Verknüpfung der Bausteine des Analogrechners durchführt. Insbesondere kann ein Programmmodul auch auf einem Prozessor laufen, der selber an der Erzeugung der Ergebnisse nicht beteiligt ist. Hierdurch entsteht eine hardwaretechnische Trennung der Aufgaben der Erzeugung der Ergebnisse auf der einen Seite und der Bewertung der Ergebnisse durch Vergleichen auf der anderen Seite. Dies hat den Vorteil, dass die Verfahrensschritte der Erzeugung der Ergebnisse sowie des Vergleichens der Ergebnisse sich weniger beeinflussen können und dadurch die Betriebssicherheit des Prozesses des Vergleichens gesteigert werden kann.

Die Anforderungen an die Zertifizierung sicherheitsrelevante Anwendungen beispielsweise in der Bahntechnik sind sehr hoch. Gemäß der internationalen Norm IEC 61508 beziehungsweise spezifisch für den Bahnbereich gemäß der europäischen Norm EN 50129 werden für Sicherheitsfunktionen vier Sicherheits-Integritätslevel oder Englisch Safety Integrity Level (SIL) beziehungsweise Sicherheits-Anforderungsstufen für die geforderte funktionale Sicherheit (Safety) unterschieden. Hierbei stellt der Sicherheits-Integritätslevel 4 die höchste und der Sicherheits-Integritätslevel 1 die niedrigste Stufe der Sicherheits-Integrität dar. Der jeweilige Sicherheits-Integritätslevel beeinflusst das Vertrauensintervall eines Messwertes dahingehend, dass das Vertrauensintervall umso kleiner ist, je höher der Sicherheits-Integritätslevel ist, der seitens der jeweiligen Vorrichtung zu erfüllen ist. Die Dimension der funktionalen Sicherheit der verschiedenen Sicherheits-Integritätslevel lässt sich anschaulich mit der zu erwartenden Häufigkeit eines Ausfalls des sicherheitsrelevanten Systems MTBF (Mean Time Between Failures) beschreiben, wobei dies in Jahren (a) angegeben wird. Diese liegt bei SIL-1 im Bereich von 10 ... 100 a, bei SIL-2 im Bereich von 100 ... 1000 a, bei SIL-3 im Bereich von 1000 ... 10000 a, und bei SIL-4 im Bereich von 10000 ... 100000 a.

### Exemplarische Ausführungsbeispiele der Zeichnung

Weitere Einzelheiten der Erfindung werden nachfolgend anhand der Zeichnung beschrieben. Gleiche oder sich entsprechende Zeichnungselemente sind in den einzelnen Figuren jeweils mit den gleichen Bezugszeichen versehen und werden nur insoweit mehrfach erläutert, wie sich Unterschiede zwischen den einzelnen Figuren ergeben.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Varianten der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Komponenten auch mit den vorstehend beschriebenen Varianten der Erfindung kombinierbar.

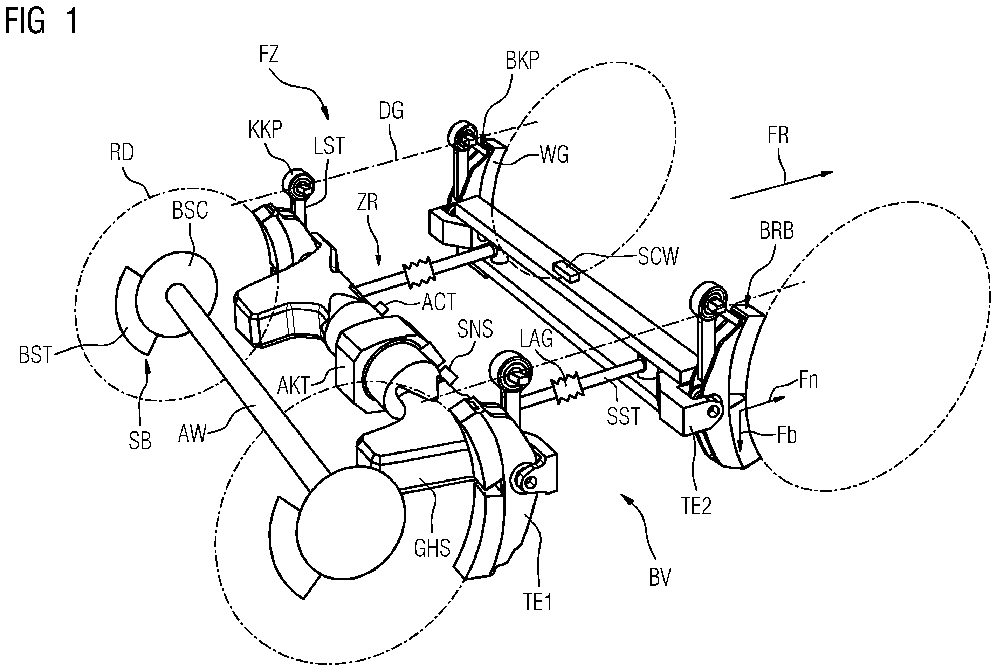

Figur 1 zeigt ein Ausführungsbeispiel der erfindungsgemäßen Vorrichtung (Drehgestell als Teil des Fahrzeugs mit Bremsvorrichtung) mit ihren Wirkzusammenhängen zwischen den zum Einsatz kommenden Funktionskomponenten schematisch in dreidimensionaler Darstellung.

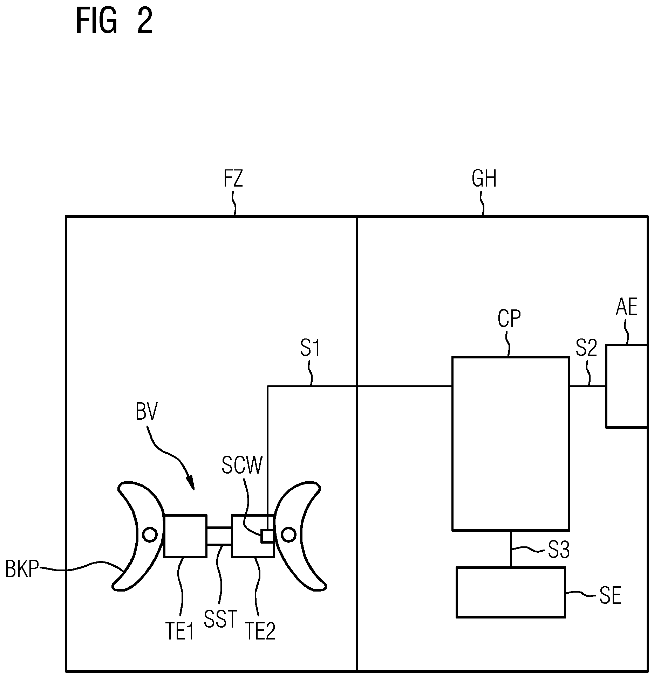

Figur 2 zeigt ein Ausführungsbeispiel einer Rechenumgebung für die Vorrichtung gemäß Figur 1 als Blockschaltbild der einzelnen Funktionskomponenten und der zwischen diesen ausgebildeten Schnittstellen, wobei einzelne Recheninstanzen Programmmodule ausführen, die jeweils in einem oder mehreren der beispielhaft dargestellten Computer ablaufen können und wobei die gezeigten Schnittstellen demgemäß softwaretechnisch in einem Computer oder hardwaretechnisch zwischen verschiedenen Computern ausgeführt sein können.

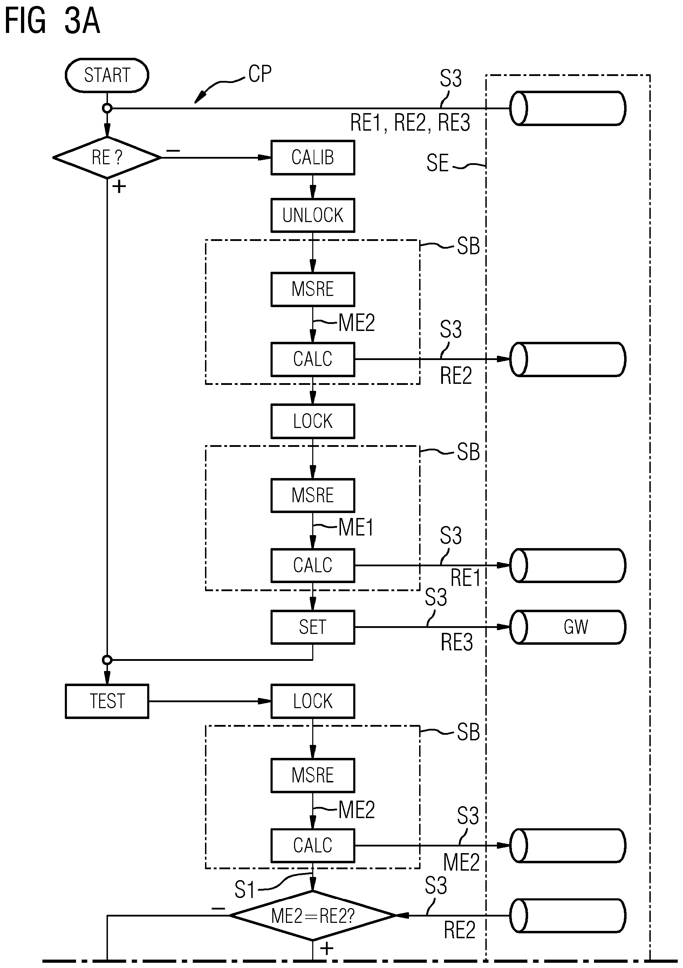

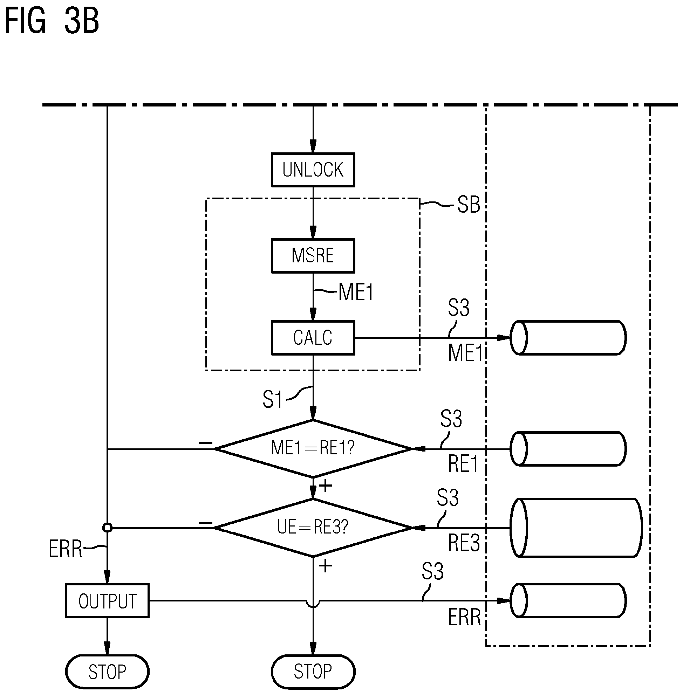

Figur 3, bestehend aus den beiden Teilfiguren 3A und 3B, zeigt ein Ausführungsbeispiel des erfindungsgemäßen Verfahrens als Flussdiagramm, wobei die gezeigten Verfahrensschritte einzeln oder in Gruppen durch Programmmodule verwirklicht sein können und wobei die Recheninstanzen und Schnittstellen gemäß Figur 2 beispielhaft angedeutet sind.

### Detaillierte Beschreibung der Zeichnung

In Figur 1 ist ein Fahrzeug FZ durch ein schematisch dargestelltes Drehgestell DG angedeutet, welches die Räder RD in zwei Achsen einer Zwillingsachse lagert. Schematisch dargestellt ist weiterhin eine Bremsvorrichtung BV in einem Zwischenraum ZR der Achsen angeordnet, welches eine Bewegung eines Aktors AKT auf die Bremsbeläge BRB überträgt, wobei die Bremsbeläge BRB mit einer Normalkraft Fn auf nicht dargestellte Radreifen der Räder RD wirken, wobei eine Bremskraft Fb entsteht.

Die Bremsvorrichtung BV ist dreidimensional mit einer ersten Teileinheit TE1 und einer zweiten Teileinheit TE2 dargestellt. Die erste Teileinheit TE1 weist ein Gehäuse GHS auf, welches eine nicht näher dargestellte Mechanik zur Übertragung der Stellbewegung des ebenfalls in dem Gehäuse GHS untergebrachten Aktors AKT beherbergt. Die Mechanik überträgt in ebenfalls nicht dargestellter Weise eine Stellbewegung auf Schubstangen SST, die zumindest hauptsächlich eine translatorische Bewegung durchführen, um einen Abstand zwischen den beiden Teileinheiten (TE1 ... TE2) zu vergrößern oder zu verkleinern.

Die Bremsvorrichtung BV ist mithilfe von vier Lagerstangen LST im Drehgestell DG aufgehängt. Die Lagerstangen LST weisen ihrerseits Kugelköpfe KKP auf, welche in an sich bekannter Weise (nicht dargestellt) in dem Drehgestell DG befestigt sind. Die Kugelköpfe KKP lassen eine Bewegung vorwiegend in horizontaler Richtung, und zwar in einer Fahrtrichtung FR bzw. entgegen dieser Fahrtrichtung FR zu. Dabei beschreiben die nicht zu erkennenden Aufhängungen der Lagerstangen LST in der Bremsvorrichtung BV Kreisbögen um die durch die Kugelköpfe KKP definierten Festpunkte im Drehgestell DG. Da die Lagerstangen LST jedoch im Wesentlichen senkrecht ausgerichtet sind, führt der technisch relevante Kreisausschnitt dieser Kreisbögen im Wesentlichen zu einer horizontalen Bewegung. Die Kugelköpfe KKP lassen auch eine gewisse Bewegung in horizontaler Richtung senkrecht zur Fahrtrichtung FR zu. Diese wird jedoch konstruktiv durch Wangen WG von Bremsköpfen BKP, die die Bremsbeläge BRB tragen, begrenzt.

In Figur 1 ist weiterhin exemplarisch eine die Räder verbindende Achswelle AW eingezeichnet, die mit zwei Bremsscheiben BSC versehen ist. Außerdem sind schematisch die beiden zugehörigen Bremssättel BST dargestellt, welche nicht näher dargestellter Bremsbeläge aufweisen, die in ebenfalls nicht näher dargestellter Weise mit den Bremsschreiben zusammenwirken. Die Bauform von Scheibenbremsen SB ist an sich auch bekannt. Die dargestellte Scheibenbremse SB ist somit als Alternative zu der mit Klotzbremsen (Bremsbeläge BRB) ausgestatteten Bremsvorrichtung BV zu verstehen.

Wenn auch in einer Figur gemeinsam dargestellt, kommt in der Realität üblicherweise nur eines der beiden dargestellten Bremssysteme in ein und demselben Fahrzeug FZ zum Einsatz. Für beide Bremssysteme gilt jedoch, dass jeweils die Räder, die Bremsen und zumindest das Drehgestell des Fahrzeugs zu einem schwingungsfähigen System gehören, dessen Schwingungsverhalten mit einem Sensor SNS aufgezeichnet werden kann. Zu diesem Zweck kann mittels eines Aktors ACT eine Schwingung in diesem schwingungsfähigen System erzeugt werden. In Figur 1 sind der Sensor SNS und der Aktor ACT als zwei gesonderte Baueinheiten dargestellt. Allerdings kann alternativ auch ein Schwingungswandler SCW zum Einsatz kommen, der sowohl die Funktion des Aktors ACT als auch die Funktion des Sensors SNS vereinigt (beispielsweise unter Verwendung eines Piezo-Wandlers). Auch ein solcher ist in Figur 1 dargestellt. Die jeweiligen Einbauorte sind lediglich als Beispiel zu verstehen. Andere Einbauorte in dem in Figur 1 dargestellten Fahrzeug sind ebenfalls denkbar, ohne das Funktionsprinzip infrage zu stellen.

In Figur 2 ist das Zusammenwirken der an dem erfindungsgemäßen Verfahren beteiligten Funktionselemente schematisch als Blockschaltbild dargestellt. Zu erkennen ist ein das Fahrzeug FZ symbolisierender Block und ein Block GH, welche sowohl den Schwingungswandler SCW (genauso könnte in nicht dargestellter Weise die gemäß Figur 1 gezeigte Kombination aus Sensor SNS und Aktor ACT zum Einsatz kommen) als auch eine Ausgabeeinrichtung AE umfassen und mit einem Computer CP über eine erste Schnittstelle S1 und eine zweite Schnittstelle S2 verbunden sind. Im Fahrzeug FZ ist exemplarisch die Bremsvorrichtung BV aus Figur 1 dargestellt. Hier könnte selbstverständlich auch die Scheibenbremse PSC gemäß Figur 1 zum Einsatz kommen.

Der Schwingungswandler SCW ist über die erste Schnittstelle S1 mit dem Computer CP verbunden, der die Messergebnisse auswertet. Der Computer CP ist überdies über eine dritte Schnittstelle S3 mit einer Speichereinrichtung SE verbunden, wobei in der Speichereinrichtung SE berechnete Referenzergebnisse und Fehlerergebnisse zum Vergleichen mit den aufgezeichneten Messergebnissen abgespeichert werden können. Über die Ausgabeschnittstelle S2 ist der Computer CP mit der Ausgabeeinrichtung AE verbunden, wobei die Ausgabeeinrichtung AE vorzugsweise ein Display ist, welches Informationen bezüglich des Betriebs der Bremse darstellen kann, oder ein System mit beispielsweise einer Funkschnittstelle, das die Informationen direkt zu einer zentralen Stelle, z. B der Lokomotive oder einer Leitzentrale, übertragen kann (nicht dargestellt). Die Ausgabeeinrichtung AE kann im einfachsten Fall durch (mindestens) eine Leuchte ausgebildet sein, die ohne weitere Informationen lediglich die Erforderlichkeit einer Wartung (Blinken bei Abnutzung der Bremsbeläge BRB über die Verschleißgrenze hinaus, Verlust von Bremsklötzen / Bremsbelägen) und den aktuellen Zustand der Bremse (leuchten entspricht angelegt / nicht Leuchten entspricht gelöst) anzeigt.

Im Folgenden soll das erfindungsgemäße Verfahren beispielhaft, wie im Flussdiagramm gemäß Figur 3 dargestellt, schrittweise erläutert werden. In Figur 3 ist außerdem beispielhaft durch Kästen angedeutet, in welchen Funktionskomponenten bzw. Recheninstanzen gemäß Figur 1 und 2 die einzelnen Schritte durchgeführt werden können. Soweit hierbei die Schnittstellen gemäß Figur 1 und 2 genutzt werden, sind diese auch in Figur 3 gekennzeichnet.

Der Figur 3 lässt sich beispielhaft der Verfahrensablauf bei dem erfindungsgemäßen Messverfahren entnehmen. Nachdem das Verfahren gestartet wurde, werden die verfügbaren Parameter aus der Speichereinrichtung SE geladen. In einem Abfrageschritt RE? wird geprüft, ob bereits die betreffenden Referenzergebnisse verfügbar sind. Wenn nicht, handelt es sich um unbekannte Kombination aus Fahrzeugart und Bremsenart, für die Referenzergebnisse noch nicht vorliegen, weswegen ein Kalibrierungsschritt CALIB durchgeführt wird.

Beim Kalibrieren werden die Bremsen in einem Deaktivierungsschritt UNLOCK zunächst gelöst. Dann erfolgt in einem Messschritt MSRE die Erzeugung eines zweiten Messergebnisses ME2. In einem anschließenden Berechnungsschritt CALC wird daraus das fehlende zweite Referenzergebnis RE2 berechnet und in die Speichereinrichtung SE übergeben.

Die Berechnung der Referenzergebnisse (soweit noch nicht verfügbar) werden bei dem Ausführungsbeispiel gemäß Figur 3 durch eine Sensorbaugruppe SB durchgeführt, die auch Rechenkapazität (welche die Funktionalität des Computers CP gemäß Figur 2 übernimmt) für den Berechnungsschritt CALC zur Verfügung stellt. Dies ist allerdings nur ein Ausführungsbeispiel. Möglich ist es auch, dass die Messergebnisse an den Computer CP übergeben werden. Dies stellt die Konfiguration dar, welche gemäß Figur 2 beschrieben wurde. Für Figur 3 gilt in diesem Fall, dass die mit Strichpunktlinie angedeutete Systemgrenze für die Sensorbaugruppe SB entfallen würde, ohne dass sich an dem Ablauf des Verfahrens sonst etwas ändern würde.

Im nächsten Schritt erfolgt ein Aktivierungsschritt LOCK für die Bremse, sodass die Bremsbeläge am Bremsanschlag (beispielsweise den Rädern RD oder der Bremsscheibe BSC) anliegen. Der vorstehend beschriebene Mess- und Berechnungsschritt MSRE und CALC werden wiederholt und lieferen zum ersten Messergebnis ME1 das erste Referenzergebnis RE1 (der bei einer Konfiguration gem. Figur 2 durch den Computer CP an die Speichereinrichtung SE übergeben wird).

Im nachfolgenden Schritt kann ausgehend von dem ersten Messergebnis ME1 und dem zweiten Messergebnis ME2 und der Kenntnis der Gegebenheiten der Bremsanlage, die formeltechnisch in der Speichereinrichtung SE abgelegt sein kann, in einem Bestimmungsschritt SET das dritte Referenzergebnis RE3 berechnet (und bei einer Konfiguration gem. Figur 2 durch den Computer CP in die Speichereinrichtung SE übergeben werden).

Wenn Referenzergebnisse bereits existieren (oder nach Abschluss von deren Berechnung), kann der Kalibrierungsschritt CALIB ausgelassen werden und es erfolgt ein Prüfschritt TEST, um den Zustand der Bremse zu überprüfen. Zu diesem Zweck wird ein Aktivierungsschritt der Bremse LOCK durchgeführt, soweit diese noch nicht angezogen ist. Anschließend erfolgt die Messung und evtl. Berechnung MSRE, CALC des zweiten Messergebnisses ME2 durch die Sensorbaugruppe SB, wie oben bereits ausgeführt. Es kann dann das aktuelle Bremsergebnis (im Falle einer Konfiguration gem. Figur 2 durch den Computer CP an die Speichereinrichtung SE) übergeben werden. Anschließend prüft der Computer CP, ob das zweite Messergebnis ME2 im Rahmen der Toleranzanforderungen mit dem zweiten Referenzergebnis RE2 übereinstimmt. Zu diesem Zweck wird das zweite Referenzergebnis RE2 aus der Speichereinrichtung SE ausgelesen. Für den Fall, dass keine Übereinstimmung festgestellt werden kann, erfolgt in einem Ausgabeschritt OUTPUT die Ausgabe eines Fehlersignals ERR, welches direkt an die Ausgabeeinrichtung AE gemäß Figur 2 gesendet werden kann oder als Fehlersignal ERR in der Speichereinrichtung SE abgelegt werden kann, um später angezeigt zu werden. Für den anderen Fall geht es wie folgt weiter

Die vorgeschriebene Prozedur wird bei gelöster Bremse wiederholt. Zu diesem Zweck wird ein Deaktivierungsschritt der Bremse UNLOCK durchgeführt. Anschließend erfolgt die Messung und evtl. Berechnung MSRE, CALC des ersten Messergebnisses ME1 durch die Sensorbaugruppe SB, wie oben bereits ausgeführt. Es kann dann das aktuelle Bremsergebnis (im Falle einer Konfiguration gem. Figur 2 durch den Computer CP an die Speichereinrichtung SE) übergeben werden. Anschließend prüft der Computer CP, ob das erste Messergebnis ME1 im Rahmen der Toleranzanforderungen mit dem ersten Referenzergebnis RE1 übereinstimmt. Zu diesem Zweck wird das erste Referenzergebnis RE1 aus der Speichereinrichtung SE ausgelesen. Für den Fall, dass keine Übereinstimmung festgestellt werden kann, erfolgt in einem Ausgabeschritt OUTPUT die Ausgabe des Fehlersignals ERR, welches direkt an die Ausgabeeinrichtung AE gemäß Figur 2 gesendet werden kann oder als Fehlersignal ERR in der Speichereinrichtung SE abgelegt werden kann, um später angezeigt zu werden. Für den anderen Fall gehe es wie folgt weiter.

Zusätzlich oder optional kann in einer Abfrage überprüft werden, ob ein Unterschied (ausgedrückt durch ein Unterschiedsergebnis UE) zwischen dem ersten Messergebnis ME1 und dem zweiten Messergebnis ME2 einem dritten Referenzergebnis RE3 entspricht. Hierbei kann es sich beispielsweise um einen Unterschied in der Dämpfung des schwingungsfähigen Systems bei angelegtem Zustand der Bremse und bei gelöstem Zustand der Bremse handeln. Wird dieser Dämpfungsunterschied nicht erreicht (d. h., dass dieser größer oder kleiner ist), kann dies zum Beispiel ein Hinweis darauf sein, dass sich die Bremsen zwar anlegen und lösen lassen, dass aber ein Bremsbelag fehlt, sodass das System bei angelegten Bremsen andere Eigenschaften aufweist, als wenn alle Bremsbeläge noch vorhanden wären. Dieses Beispiel zeigt, dass die hier erläuterte zusätzliche Prüfung auch zusätzliche Aussagen ermöglicht, die über die vorhergehenden Aussagen hinausgehen. Auch hier kann im Bedarfsfall ein Fehler ERR in der oben beschriebenen Weise ausgegeben werden.

Nicht dargestellt in Figur 3 ist eine weiterführende Prüfung der Fehlersignale ERR, wobei zu diesem Zweck die Messergebnisse oder Unterschiedsergebnisse mit Fehlerergebnissen verglichen werden können. Diese Fehlerergebnisse können genauso wie die vorgenannten Messergebnisse und Unterschiedsergebnisse UE auch in der Speichereinrichtung abgelegt sein, wobei die weiterführende Untersuchung in nicht dargestellter Weise durch den Computer vorgenommen wird. Die Analyse der Qualität und/oder Quantität der Fehler lässt dann zusätzliche Aussagen zu, wie beispielsweise die vorstehend bereits erwähnte des Verlustes eines Bremsbelags. Hierdurch können wertvolle Erkenntnisse gewonnen werden, ob aufgrund des erzeugten Fehlersignals ERR der weitere Betrieb des betreffenden Fahrzeugs sofort unterbunden werden muss (bis Weise bei vollständigem Ausfall der Bremse) oder nur in absehbarer Zeit eine Wartung vorgenommen werden muss (beispielsweise bei einem fortgeschrittenen Verschleiß der Bremsbeläge).

### Bezugszeichenliste / List of Reference

- ACT: Aktor
- AE: Ausgabeeinrichtung
- AW: Achswelle
- BKP: Bremsköpfe
- BRB: Bremsbeläge
- BRB: Bremsbelag
- BSC: Bremsscheiben
- BST: Bremssättel
- BV: Bremsvorrichtung
- CALC: Berechnungsschritt
- CALIB: Kalibrierungsschritt
- CP: Computer
- DG: Drehgestell
- DG: Drehgestell
- ERR: Fehlersignal
- Fb: Bremskraft
- Fn: Normalkraft
- FR: Fahrtrichtung
- FZ: Fahrzeug
- GHS: Gehäuse
- KKP: Kugelköpfe
- LAG: Längenausgleich
- LOCK: Aktivierungsschritt für Bremse
- LST: Lagerstangen
- ME1: erstes Messergebnis
- ME2: zweites Messergebnis
- OUTPUT: Ausgabe Fehlersignal
- RD: Rad
- RE1: erstes Referenzergebnis
- RE2: zweites Referenzergebnis
- RE3: drittes Referenzergebnis
- S1 ... S3: Schnittstelle
- SB: Scheibenbremsen
- SCW: Schwingungswandler
- SE: Speichereinrichtung
- SET: Bestimmungsschritt
- SNS: Sensor
- SST: Schubstangen
- TE1: erste Teileinheit
- TE2: zweite Teileinheit
- TEST: Prüfschritt
- UE: Unterschiedsergebnis
- UNLOCK: Deaktivierungsschritt für Bremse

## Patentansprüche

1. Verfahren zum Durchführen einer Bremsprobe bei einem aus mehreren Fahrzeugen bestehenden spurgeführten Fahrzeugverband, bei dem geprüft wird, ob sich die Bremsen des Fahrzeugverbandes ordnungsgemäß angelegen und lösen lassen,
**dadurch gekennzeichnet, dass**
im angelegten Zustand der Bremse in jedem Fahrzeug
a) mit einem Aktor (ACT) eine Schwingung in einem Bremsen und Räder des betreffenden Fahrzeugs enthaltenden schwingungsfähigen System erzeugt wird,
b) mit einem Sensor (SNS) die erzeugte Schwingung in dem betreffenden schwingungsfähigen System als ein erstes Messergebnis (ME1) für den angelegten Zustand für das betreffende Fahrzeug aufgezeichnet wird,
und
danach im gelösten Zustand der Bremse in jedem Fahrzeug
c) mit dem jeweiligen Aktor (ACT) eine Schwingung in dem betreffenden schwingungsfähigen System erzeugt wird,
d) mit dem jeweiligen Sensor (SNS) die erzeugte Schwingung in dem betreffenden schwingungsfähigen System als Messergebnis für den gelösten Zustand für das betreffende Fahrzeug aufgezeichnet wird
und
e) rechnergestützt jedes erste Messergebnis (ME1) mit einem ersten Referenzergebnis (RE1) für den gelösten Zustand verglichen wird,
und/oder
rechnergestützt jedes zweite Messergebnis (ME2) mit einem zweiten Referenzergebnis (RE2) für den angelegten Zustand verglichen wird,
und/oder
rechnergestützt jedes erste Messergebnis (ME1) mit dem betreffenden zweiten Messergebnis (ME2) verglichen wird und ein ermitteltes Unterschiedsergebnis (UE) mit einem dritten Referenzergebnis (RE3) für den Unterschied verglichen wird,
f) für den Fall, dass zwischen einem der Messergebnisse und/oder der Unterschiedsergebnisse (UE) sowie dem zugehörigen der Referenzergebnisse eine Abweichung festgestellt wird, die außerhalb eines zulässigen Toleranzbereiches liegt, rechnergestützt ein Fehlersignal (ERR) erzeugt wird.

2. Verfahren nach Anspruch 1, **dadurch gekennzeichnet, dass** der Aktor (ACT) als Schwingung einen vorgegebenen Schwingungsimpuls erzeugt und der Sensor (SNS) danach als erzeugte Schwingung eine Impulsantwort des schwingungsfähigen Systems aufzeichnet.

3. Verfahren nach Anspruch 1, **dadurch gekennzeichnet, dass** der Aktor (ACT) als Schwingung einen vorgegebenen Schwingungsverlauf erzeugt und der Sensor (SNS) während der Erzeugung der Schwingung und/oder danach als erzeugte Schwingung eine Schwingungsantwort des schwingungsfähigen Systems aufzeichnet.

4. Verfahren nach einem der vorhergehenden Ansprüche, **dadurch gekennzeichnet, dass** jedes Messergebnis vor dem Durchführen des Schrittes d) gemäß Anspruch 1 rechnergestützt bearbeitet wird.

5. Verfahren nach Anspruch 4, **dadurch gekennzeichnet, dass** jedes Messergebnis derart bearbeitet wird, dass dieses ein Maß für die Resonanzfrequenz des schwingungsfähigen Systems darstellt.

6. Verfahren nach einem der Ansprüche 4 oder 5, **dadurch gekennzeichnet, dass** jedes Messergebnis derart bearbeitet wird, dass dieses ein Frequenzspektrum darstellt.

7. Verfahren nach einem der Ansprüche 4 bis 6, **dadurch gekennzeichnet, dass** jedes Messergebnis derart bearbeitet wird, dass dieses ein Maß für die Dämpfung des schwingungsfähigen Systems darstellt.

8. Verfahren nach einem der vorhergehenden Ansprüche, **dadurch gekennzeichnet, dass**
g) als erste Referenzergebnisse (RE1) und/oder als zweite Referenzergebnisse (RE2) und/oder als dritte Referenzergebnisse (RE3) für eine vorgegebene Vielzahl von Bremstypen oder für eine vorgegebene Vielzahl von Paarungen zwischen Bremstypen und Fahrzeugtypen erstellt werden und
h) für jedes Fahrzeug ein bestimmtes erstes Referenzergebnis (RE1) und/oder zweites Referenzergebnis (RE2) und/oder drittes Referenzergebnis (RE3) unter Berücksichtigung des im Fahrzeug zum Einsatz kommenden Bremstyps oder unter Berücksichtigung sowohl des zum Einsatz kommenden Bremstyps als auch des Fahrzeugtyps zum Abruf im Bedarfsfall gespeichert wird.

9. Verfahren nach einem der voranstehenden Ansprüche, **dadurch gekennzeichnet, dass**
i) ein erstes Referenzergebnis (RE1) und/oder ein zweites Referenzergebnis (RE2) und/oder ein drittes Referenzergebnis (RE3) für mindestens ein Fahrzeug individuell ermittelt wird und
j) für jedes Fahrzeug das ermittelte erste Referenzergebnis (RE1) und/oder zweite Referenzergebnis (RE2) und/oder dritte Referenzergebnis (RE3) zum Abruf im Bedarfsfall gespeichert wird.

10. Verfahren nach einem der vorhergehenden Ansprüche, **dadurch gekennzeichnet, dass**
k) erste Fehlerergebnisse und/oder zweite Fehlerergebnisse und/oder dritte Fehlerergebnisse für das Auftreten typischer bei der Bremsprobe zu ermittelnder Fehlerarten gespeichert sind,
I) für den Fall, dass in dem Schritt f) gemäß Anspruch 1 ein Fehlersignal (ERR) erzeugt wird, rechnergestützt das betreffende erste Messergebnis (ME1) mit den ersten Fehlerergebnissen verglichen wird,
und/oder
rechnergestützt das betreffende zweite Messergebnis (ME2) mit den zweiten Fehlerergebnissen verglichen wird,
und/oder
rechnergestützt das ermittelte Unterschiedsergebnis (UE) mit den dritten Fehlerergebnissen verglichen wird,
m) für den Fall, dass zwischen einem der Messergebnisse und/oder einem der Unterschiedsergebnisse (UE) sowie einem zugehörigen Fehlerergebnis im Rahmen vorgegebener Abweichungen eine Übereinstimmung festgestellt wird, rechnergestützt eine die betreffende Fehlerart beschreibende Fehlermeldung erzeugt wird.

11. Verfahren nach einem der vorhergehenden Ansprüche, **dadurch gekennzeichnet, dass** für jedes schwingungsfähige System zumindest eines der Fahrzeuge redundante Aktoren (ACT) und/oder Sensoren (SNS) zum Einsatz kommen.

12. Spurgeführtes Fahrzeug, bei dem Räder und Bremsen ein schwingungsfähiges System bilden, wobei das Fahrzeug
n) einen Sensor (SNS) zum Aufzeichnen des Schwingungsverhaltens des schwingungsfähigen Systems aufweist,
o) eine Rechenumgebung mit einem Computer bildet,
**dadurch gekennzeichnet, dass**
p) die Rechenumgebung eingerichtet ist, die Schritte e) und f) gemäß Anspruch 1 auszuführen,
q) der Sensor (SNS) als Schwingungswandler (SCW) ausgeführt ist, der auch als Aktor (ACT) zum Erzeugen einer Schwingung in dem schwingungsfähigen System verwendbar ist, wobei der Schwingungswandler (SCW) eingerichtet ist, die Schritte a) bis d) gemäß Anspruch 1 auszuführen,
oder
das Fahrzeug einen Aktor (ACT) zum Erzeugen einer Schwingung in dem schwingungsfähigen System aufweist, wobei der Sensor (SNS) eingerichtet ist, die Schritte b) und d) gemäß Anspruch 1 auszuführen und wobei der Aktor (ACT) eingerichtet ist, die Schritte a) und c) gemäß Anspruch 1 auszuführen.

13. Computerprogramm, umfassend Programmbefehle, die bei der Ausführung des Programms durch einen Computer in einer Rechenumgebung diesen dazu veranlassen, die Schritte e) und f) des Verfahrens nach einem der Ansprüche 1 - 11 auszuführen.

14. Computerlesbares Speichermedium für Daten, welches Datensätze des Computerprogrammproduktes nach dem letzten voranstehenden Anspruch speichert.

## Claims

1. Method for carrying out a brake test in a rail-guided vehicle combination comprising a plurality of vehicles, during which it is checked whether the brakes of the vehicle combination may be properly applied and released,
**characterised in that**
in the applied state of the brakes in each vehicle,
a) a vibration is generated in a vibratory system, which includes brakes and wheels of the relevant vehicle, by an actuator (ACT),
b) the generated vibration in the relevant vibratory system is recorded by a sensor (SNS) as a first measurement result (ME1) for the applied state for the relevant vehicle,
and
subsequently in the released state of the brake in each vehicle,
c) a vibration is generated in the relevant vibratory system by the respective actuator (ACT),
d) the generated vibration in the relevant vibratory system is recorded by the respective sensor (SNS) as a measurement result for the released state for the relevant vehicle
and
e) with the aid of a computer each first measurement result (ME1) is compared with a first reference result (RE1) for the released state,
and/or
with the aid of a computer each second measurement result (ME2) is compared with a second reference result (RE2) for the applied state,
and/or
with the aid of a computer each first measurement result (ME1) is compared with the relevant second measurement result (ME2) and an ascertained difference result (UE) is compared with a third reference result (RE3) for the difference,
f) for the case where a deviation, which lies outside of an admissible tolerance range, is established between one of the measurement results and/or the difference results (UE) as well as the associated one of the reference results, an error signal (ERR) is generated with the aid of a computer.

2. Method according to claim 1, **characterised in that** the actuator (ACT) generates a specified vibration pulse as a vibration and the sensor (SNS) subsequently records a pulse response of the vibratory system as a generated vibration.

3. Method according to claim 1, **characterised in that** the actuator (ACT) generates a specified vibration profile as a vibration and the sensor (SNS) records a vibration response of the vibratory system during the generation of the vibration and/or subsequently as a generated vibration.

4. Method according to one of the preceding claims, **characterised in that** each measurement result is processed with the aid of a computer before step d) according to claim 1 is carried out.

5. Method according to claim 4, **characterised in that** each measurement result is processed in such a way that it represents a measure of the resonance frequency of the vibratory system.

6. Method according to one of claims 4 or 5, **characterised in that** each measurement result is processed in such a way that it represents a frequency spectrum.

7. Method according to one of claims 4 to 6, **characterised in that** each measurement result is processed in such a way that it represents a measure of the damping of the vibratory system.

8. Method according to one of the preceding claims, **characterised in that**
g) as first reference results (RE1) and/or as second reference results (RE2) and/or as third reference results (RE3) for a specified large number of brake types or for a specified large number of pairings between brake types and vehicle types are created and
h) for each vehicle a particular first reference result (RE1) and/or second reference result (RE2) and/or third reference result (RE3) is stored for retrieval when necessary by taking into account the brake type used in the vehicle or by taking into account the brake type used and also the vehicle type.

9. Method according to one of the preceding claims, **characterised in that**
i) a first reference result (RE1) and/or a second reference result (RE2) and/or a third reference result (RE3) is individually ascertained for at least one vehicle and
j) for each vehicle the ascertained first reference result (RE1) and/or second reference result (RE2) and/or third reference result (RE3) is stored for retrieval when necessary.

10. Method according to one of the preceding claims, **characterised in that**
k) first error results and/or second error results and/or third error results are stored for the occurrence of typical types of error which can be ascertained during the brake test,
l) for the case where an error signal (ERR) is generated in step f) according to claim 1,
with the aid of a computer the relevant first measurement result (ME1) is compared with the first error results,
and/or
with the aid of a computer the relevant second measurement result (ME2) is compared with the second error results,
and/or
with the aid of a computer the ascertained difference result (UE) is compared with the third error results,
m) for the case where a match is established between one of the measurement results and/or one of the difference results (UE) and an associated error result in the context of specified deviations, an error message describing the relevant type of error is generated with the aid of a computer.

11. Method according to one of the preceding claims,
**characterised in that**
redundant actuators (ACT) and/or sensors (SNS) are used for each vibratory system of at least one of the vehicles.

12. Rail-guided vehicle in which the wheels and brakes form a vibratory system, wherein the vehicle
n) has a sensor (SNS) for recording the vibration behaviour of the vibratory system,
o) forms a computing environment with a computer,
**characterised in that**
p) the computing environment is configured to execute the steps e) and f) according to claim 1,
q) the sensor (SNS) is designed as a vibration transducer (SCW) which can also be used as an actuator (ACT) for generating a vibration in the vibratory system, wherein the vibration transducer (SCW) is configured to execute the steps a) to d) according to claim 1,
or
the vehicle has an actuator (ACT) for generating a vibration in the vibratory system, wherein the sensor (SNS) is configured to execute the steps b) and d) according to claim 1 and wherein the actuator (ACT) is configured to execute the steps a) and c) according to claim 1.

13. Computer program, comprising program commands which when the program is executed by a computer in a computing environment prompt it to execute the steps e) and f) of the method according to one of claims 1 - 11.

14. A computer-readable storage medium for data which stores datasets of the computer program product according to the immediately preceding claim.

## Revendications

1. Procédé pour effectuer un essai de freinage dans un convoi de véhicules guidé sur rail constitué de plusieurs véhicules, dans lequel on contrôle si les freins du convoi de véhicules peuvent dûment se serrer et se desserrer,
**caractérisé**
**en ce que**, dans l'état serré du frein dans chaque véhicule,
a) par un actionneur (ACT), on produit une vibration dans un système apte à vibrer contenant des freins et des roues du véhicule concerné,
b) par un capteur (SNS), on enregistre la vibration produite dans le système concerné apte à vibrer, comme un premier résultat (ME1) de mesure pour l'état serré pour le véhicule concerné,
et
ensuite, dans l'état desserré du frein dans chaque véhicule,
c) par l'actionneur (ACT) respectif, on produit une vibration dans le système concerné apte à vibrer,
d) par le capteur (SNS) respectif, on enregistre la vibration produite dans le système concerné apte à vibrer, comme résultat de mesure pour l'état desserré pour le véhicule concerné,
et
e) en étant assisté par ordinateur, on compare chaque premier résultat (ME1) de mesure à un premier résultat (RE1) de référence pour l'état desserré,
et/ou
en étant assisté par ordinateur, on compare chaque deuxième résultat (ME2) de mesure à un deuxième résultat (RE2) de mesure pour l'état serré,
et/ou
en étant assisté par ordinateur, on compare chaque premier résultat (ME1) de mesure au deuxième résultat (ME2) de mesure concerné et on compare un résultat (UE) de mesure déterminé à un troisième résultat (RE3) de référence pour la différence,
f) dans le cas où l'on constate, entre l'un des résultats de mesure et/ou des résultats (UE) de différence ainsi que celui associé aux résultats de référence, un écart, qui est à l'extérieur d'une plage de tolérance admissible, on produit, en étant assisté par ordinateur, un signal (ERR) de défaillance.

2. Procédé suivant la revendication 1, **caractérisé en ce que** l'actionneur (ACT) produit, comme vibration, une impulsion de vibration donnée à l'avance et le capteur (SNS) enregistre ensuite, comme vibration produite, une réponse à l'impulsion du système apte à vibrer.

3. Procédé suivant la revendication 1, **caractérisé en ce que** l'actionneur (ACT) produit, comme vibration, une courbe de vibration donnée à l'avance et le capteur (SNS) enregistre, pendant la production de la vibration et/ou après, comme vibration produite, une réponse à la vibration du système apte à la vibration.

4. Procédé suivant l'une des revendications précédentes, **caractérisé en ce que** l'on traite, avec assistance par ordinateur, chaque résultat de mesure avant d'effectuer le stade d) suivant la revendication 1.

5. Procédé suivant la revendication 4, **caractérisé en ce que** l'on traite chaque résultat de mesure de manière à ce que celui-ci représente une mesure de la fréquence de résonnance du système apte à la vibration.

6. Procédé suivant l'une des revendications 4 ou 5, **caractérisé en ce que** l'on traite chaque résultat de mesure de manière à ce que celui-ci représente un spectre de fréquence.

7. Procédé suivant l'une des revendications 4 à 6, **caractérisé en ce que** l'on traite chaque résultat de mesure, de manière à ce que celui-ci représente une mesure de l'amortissement du système.

8. Procédé suivant l'une des revendications précédentes, **caractérisé en ce que**
g) on établit, comme premiers résultats (RE1) de référence et/ou comme deuxièmes résultats (RE2) de référence et/ou comme troisièmes résultats (RE3) de référence, pour une pluralité donnée à l'avance de types de frein, une pluralité donnée à l'avance d'appariements entre des types de frein et des types de véhicules, et
h) pour chaque véhicule, on met en mémoire, pour appel en cas de besoin, un premier résultat (RE1) de référence déterminé et/ou un deuxième résultat (RE2) de référence et/ou un troisième résultat (RE3) de référence, en tenant compte du type de frein entrant en action dans le véhicule ou en tenant compte tant du type de frein entrant en action qu'également du type de véhicule.

9. Procédé suivant l'une des revendications précédentes, **caractérisé en ce que**
i) on détermine individuellement un premier résultat (RE1) de référence et/ou un deuxième résultat (RE2) de référence et/ou un troisième résultat (RE3) de référence pour au moins un véhicule, et
j) pour chaque véhicule, on met en mémoire, pour appel en cas de besoin, le premier résultat (RE1) de résultat déterminé et/ou le deuxième résultat (RE2) de référence et/ou le troisième résultat (RE3) de référence.

10. Procédé suivant l'une des revendications précédentes, **caractérisé en ce que**
k) on met en mémoire des premiers résultats de défaillance et/ou des deuxièmes résultats de défaillance et/ou des troisièmes résultats de défaillance pour l'apparition de sortes de défaillance à déterminer typiquement dans l'essai de freinage,
l) dans le cas où, dans le stade f) suivant la revendication 1, on produit un signal (ERR) de défaillance, on compare, avec assistance par ordinateur, le premier résultat (ME1) de mesure concerné aux premiers résultats de mesure,
et/ou
on compare, avec assistance par ordinateur, le deuxième résultat (ME2) de mesure concerné aux deuxièmes résultats de défaillance, et/ou
on compare, avec assistance par ordinateur, le résultat (UE) de différence déterminé aux troisièmes résultats de défaillance,
m) dans le cas où l'on constate, entre l'un des résultats de mesure et/ou l'un des résultats (UE) de différence ainsi qu'un résultat de défaillance associé, une coïncidence dans le cadre d'écarts donnés à l'avance, on produit, avec assistance par ordinateur, un message de défaillance décrivant la sorte de défaillance concernée.

11. Procédé suivant l'une des revendications précédentes, **caractérisé en ce que**, pour chaque système apte à la vibration, entre en action au moins l'un des actionneurs (ACT) et/ou capteurs (SNS) redondants des véhicules.

12. Véhicule guidé sur rail, dans lequel les roues et les freins forment un système apte à la vibration, dans le véhicule
n) a un capteur (SNS) d'enregistrement du comportement en vibration du système apte à la vibration,
o) forme un environnement informatique avec un ordinateur, **caractérisé en ce que**
p) l'environnement informatique est agencé pour exécuter les stades e) et f) suivant la revendication 1,
q) le capteur est réalisé en transducteur (SCW) de vibration, qui peut être utilisé également comme actionneur (ACT) pour la production d'une vibration dans le système apte à la vibration, dans lequel le transducteur (SCW) de vibration est agencé pour exécuter les stades a) à d) suivant la revendication 1,
ou
le véhicule a un actionneur (ACT) de production d'une vibration dans le système apte à la vibration, dans lequel le capteur (SNS) est agencé pour exécuter les stades b) et d) suivant la revendication 1 et dans lequel l'actionneur (ACT) est agencé pour exécuter les stades a) et c) suivant la revendication 1.

13. Système d'ordinateur, comprenant des instructions de programme qui, lors de l'exécution du programme par un ordinateur dans un environnement informatique, font que celui-ci exécute les stades e) et f) du procédé suivant l'une des revendications 1 à 11.

14. Support de mémoire, déchiffrable par ordinateur, pour des données, qui mettent en mémoire des ensembles de données du produit de programme d'ordinateur suivant la dernière revendication précédente.
